# EUROPEAN PATENT APPLICATION

(11) **EP 2 911 108 A1**
(43) Date of publication of application: **26.08.2015**
(21) Application number: 14380008.4
(22) Date of filing: 24.02.2014
(51) Int. Cl.: G06Q 30/02, G06Q 30/06, G06Q 20/00

(54) **Method and system of interactive shop windows**

(71) Applicant: Movilok Interactividad Movil, S.L., 28007 Madrid (ES)
(72) Inventor: Del Ser Toral, Luis, 28007 Madrid (ES)
(74) Representative: De la Fuente Fernandez, Dionisio

(57) **Abstract**

It is described a system designed for application to retail outlets, formed of devices for calculation and visual presentation of products, whose devices are designed to be installed in shop windows and shop windows for public viewing, and which are interactive. The system allows a user, using a device such as his/her mobile phone, to link temporarily to a shop window in proximity and interact with the shop window in two directions: sending information from the mobile phone to the shop window (browsing the products presented, providing personal or contextual information from the user to the system) and collecting information from the shop window in his/her mobile phone (description of the product, price or offers, etc.).

## Description

### Object of the Invention

This invention refers to a method and system of interactive shop windows including essential new features and notable advantages compared to the means already known and used for the same purposes in the current state of the art.

More particularly, the invention refers to a method and system allowing interaction between users' mobile telephones and the devices existing in digital shop windows in the retail outlets approached by the user carrying a mobile phone. In particular, the invention is related to tools with the ability to show the public products located in physical spaces such as shop windows, shop windows and kiosks or news-stands, and is also related to the interaction between the mobile phones carried by users and machines and systems in their surroundings, such as "Internet of Things" and "Smart Cities".

The field of application of the invention is included in the industrial sector devoted to wireless communications.

### Background and Summary of the Invention

Traditional shop windows exhibit physical products (shoes, clothes) or reproductions thereof (mobile telephones, model houses) behind a glass in a shop window or an area of the premises with visibility to the public, typically close to the entrance to the retail outlet. This allows the public viewing the product in the shop window to enter the store for information about the product and possibly buy it. There is no interaction if the user does not enter the store.

There are also solutions which provide physical shop windows with screens and other presentation elements which allow user interaction, either by touch interaction or by recognition of the gestures made by the user, and also by detecting the user's presence in the proximity of the shop window. There are also presentation solutions for shop windows which use the visual recognition of individuals' features to estimate their sex, age, attitude (for example, whether they are smiling) and thereby generate some kind of segmentation; this allows them to present content appropriate for a certain profile on a shop window viewing screen.

In this type of shop window, however, the interaction is one-directional and is designed to show content in the shop window which is adapted to the user's selection (touch screen, using gestures, etc.), or to his/her personal characteristics (sex, age).

Some of the existing shop windows have some type of barcode or matrix code, for example printed next to the physical product or presented dynamically on a screen, so that users can scan it with their mobile phone and consult more detailed information about the product from there.

Despite the fact that mobile devices take an increasing part in users' purchasing processes, to date there are still no solutions which allow complete two-directional interaction between a user's mobile phone and the shop windows in his/her vicinity.

### Explanation of the invention

This invention refers to a method and system allowing interaction between users' mobile telephones and the devices existing in digital shop windows in the retail outlets approached by the user carrying a mobile phone or phones. The digital shop window is formed of a control device with communication ability (for example, IP communication), which can present content on a viewing device (for example a monitor or television screen).

The products displayed for viewing are the result of a composition of the content according to a structure pre-established by a template. This means that the content (models, prices, etc.) can be specific to each shop window, but the templates are a facility which can be used as a basis for more than one shop window.

When a person carrying a mobile phone approaches a shop window which has the system, he/she can link their mobile device temporarily to that digital shop window. Using this established link, a specific interaction session is initiated between the shop window and the mobile phone, in which it is possible to exchange content in both directions:
- The user can use his/her mobile phone as a remote control to administer the content presented on the shop window viewing device, such as, for example, the products presented or the details defining them;
- The user can transfer personal preferences, features of his/her profile or criteria to the shop window, so that the products presented in the display are limited or adapted to his/her specifications. These specifications may be anonymous;
- The user can collect pre-established information (for example, text, pictures, specific offers) on the desired product in the digital shop window and save them on his/her mobile device for consultation when he/she wishes.

This integration with physical stores is in line with what IBM describes as a strategic trend over the next 5 years:
"But over the next five years, local stores and shops will flip the javascript by giving us an immersive, mixed real and virtual experience. And being local will become increasingly important as shoppers demand the instant gratification of their purchases. Two day shipping will feel like snail mail when a local store can offer customers a variety of fast pick-up or delivery options, wherever they are." [IBM 5 in 5 predictions: Buying local will beat online. See the website: http://www.research.ibm.com/cognitive-computing/machine-learning-applications/retail-stores.shtml#fbid=CGg6zxOj1DD]

The proposed system includes both elements specific to each interactive shop window and common management elements, which are shared by all the shop windows in a common services infrastructure interlinked via IP networks or via Internet. This invention also includes the method for implementation of a shop window with specific content and viewing, distinguished from the rest.

The system proposed by this invention allows the structure and the visual appearance of each shop window to be made individual. This structure can be modified independently of the content of the shop window. The system thus offers multiple advantages, allowing the creation of interactive shop windows which can be linked to devices carried by users (typically their mobile phones), in which it is possible to transfer information in both directions:
- From the mobile phone to the shop window, to give the retail outlet our preferences or profiles, and
- From the shop window to the mobile phone, allowing the user to collect and/or store information about the products selected in the shop window resulting from an interaction.

The proposed invention comprises the presentation shown in the shop window from separate sources: on the one hand the content (i.e. the information about the products), and on the other hand, the templates with the visual format and the structure used to organise the content. The content and the templates can be modified independently to make it easier to personalise and update each shop window.

### Brief Description of the Drawings

To make it easier to understand the invention, several pages of drawings are attached, showing graphic representations to illustrate the object of the invention. In the drawings:
Figure 1 is a general schematic view of the system of interactive shop windows proposed by this invention;
Figure 2 is an illustration of a system designed to set up and/or update an interactive shop window;
Figure 3 is diagram illustrating a detail of a link between a mobile phone and a shop window, and the way the interaction is carried out, and

Figure 4 is a schematic illustration of a proposed method for the invention's interaction system.

### Description of the Preferred Embodiment

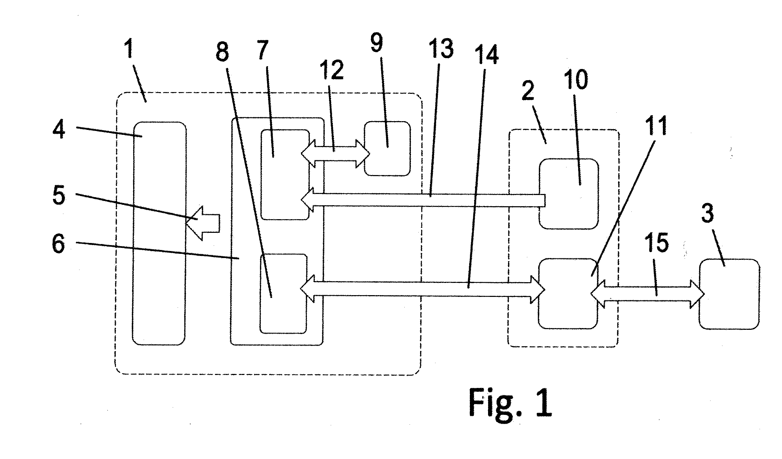

As stated previously, the detailed description of the preferred embodiment of the object of the invention will be given below with the help of the attached drawings, in which the same numerical references are used to designate identical or similar parts. Dealing firstly with the schematic representation shown by the diagram in Figure 1, this shows a general view of the system of interactive shop windows in this invention, in which the three basic elements involved in the invention system are represented: the interactive shop window 1, the common infrastructure 2 of services for all the shop windows, and the users' mobile phones 3.

The interactive shop window 1 is an element which can be replicated in different retail outlets. It is formed of a control module 6 with processing and communication capacity, which performs three main functions:
- Function for construction of the visual part of the shop window. This is carried out by the layout construction module 7. The details of the products shown in the shop window (content) are stored separately from the structure used to present them (template). When a shop window is set up, when the content is updated or when the way it is presented is updated, the construction module 7 combines the details of the products with the template and recreates the layout of the shop window.

The construction module 7 uses an interface 13 to access the central template manager 10 to recover the template which will be used for the shop window.

The construction module has the ability to access the content manager 9 via another interface 12 to recover the details relating to the products. The construction module 7 also has the ability to communicate with the content manager 9 to store information of any kind, for example analytical information (most viewed products, times when the system is used, etc.)
- Function to manage the interactions and the information exchanged from outside the shop window. This is carried out by the interaction control module 8 from outside the shop window. This interaction control module 8 communicates via a communication interface 14 with the central link/interaction manager 11 to coordinate the link with the user devices, the interactions from these devices and the exchange of content.
- Function for presentation of the result via a standardised interface 5 which connects with a presentation device 4.

The common central shop window management infrastructure 2 is the coordinating element in the solution and provides centralised support to all the shop windows in the system. Its main functions are:
- Template management: Using the template management module 10, the central manager acts as a repository for "templates" or models of example shop window structures. A template is used as a pattern from which the shop window content construction module 7 adds the content for that particular shop window.

The templates define all the aspects which give form to the shop window (structure into which the information will be organised, visual appearance, behaviour when an interaction occurs), but do not include real product details. A template may be used for more than one shop window, but in general it is solely a model taken as a base and personalised for a shop window in a specific retail outlet. These specific, non-shared templates are also housed in the template manager 10, which acts as a repository for all of them.
- Management of interaction: The link/interaction management module 11 acts to set up a link between a user device 3 and a specific shop window 1. This establishes a session in which the user's mobile phone can interact with the content displayed on the presentation element 4 of the shop window 1.

The device or mobile phone 3, for example a smartphone or any other device with similar characteristics, has the ability to house an application and have IP connectivity. Such an application will usually come from a download from a specific mobile platform applications store, but it may also be obtained by other means or may be a feature included in the mobile phone's factory settings.

The mobile phone application has the following basic functions:
- To capture or collect information identifying a shop window 1, such as a signal which is emitted (Bluetooth) or collected (NFC, a sound, graphic or text signal, etc.); the shop window may also be identified indirectly, from positioning mechanisms in the mobile phone/device which is near the shop window (for example, GPS coordinates). It may also be identified by the user of the device, using a list or a map in the application;
- To communicate with the link/interaction central management module 11 by sending it the shop window identifier, so that it can link with that shop window and initiate an interaction session;
- To have the ability to invoke operations within the session so that it can send information (for example, in the form of commands, selections, preferences) which affects the objects presented in the shop window. The responses in the operations allow data to be received from the system.

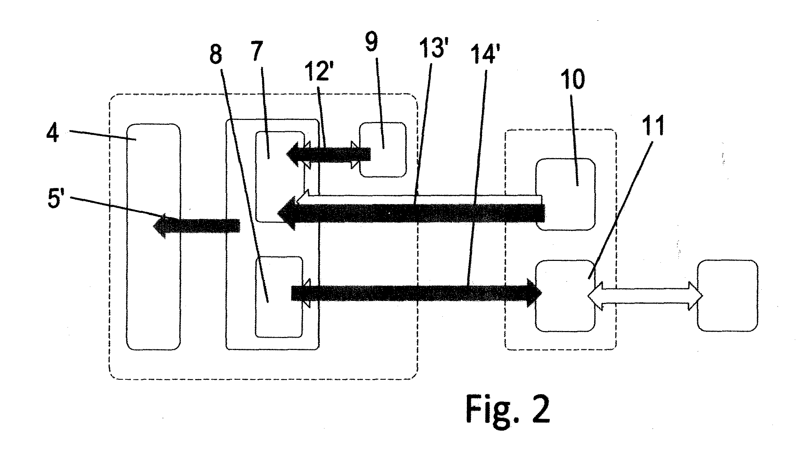

Turning now to Figure 2 in the drawings, this shows a schematic representation of the method used to set up and/or update an interactive shop window 1. The content in the shop window 1 (i.e. the details of the products and their characteristics) come from a specific information repository 9 for that shop window. The visual structure of the shop window is a template which is obtained from a common external control server 10, which is shared by the shop windows. This model allows for the existence of model templates for the shop windows, with test data, which can be personalised as required without the need for access to the particular information about the specific products in a shop window. The shop window construction manager 4 combines the structure with the products and applies the defined layout to them to obtain a specific representation of a shop window. Subsequently, it is possible to update the content (the products or their attributes) and the structure or the visual appearance of a shop window 1 independently.

The set-up process for starting up a shop window 1, shown in Figure 2, is as follows:
- The layout construction module 7 recovers the content 12' which is stored in the repository of the content manager module 9;
- The layout construction module 7 recovers the template 13' corresponding to that shop window which is stored in the repository of the central template manager module 10;
- The layout construction module 7 combines content 12' and template 13', and generates the presentation (layout) 5' of the shop window which is presented in the presentation module 4;
- Finally, the interaction control module 14' establishes communication with the central link/interaction management module to tell it that it is operational and available.

The mechanism for updating the shop window, when the template or the content is changed, follows a process equivalent to the set-up process just explained.

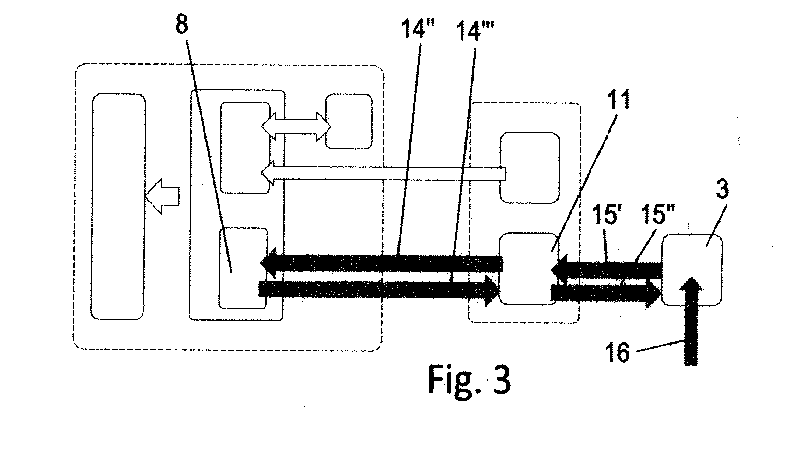

The process for linking a user mobile phone 3 with the shop window 1 is carried out according to the diagram shown schematically in Figure 3. The process is as follows:
- The user of the mobile phone 3 or the application obtains the identifier 16 from the shop window 1 which is available and sends it to the central link/interaction management module 11 by means of a communication 15';
- This central link/interaction management module 11 communicates the identifier 16 to the shop window interaction control module 8 via a communication 14", and this shop window interaction control module 8 responds with a communication 14"' to the central link/interaction management module 11 indicating that it is in agreement;
- This central link/interaction management module 11 confirms the operation to the user and from that moment the user mobile phone 3 can perform interactions with the shop window 1.

Once the user mobile phone 3 is linked to the shop window 1, interactions can be carried out using the same route created in the link, and may also be carried out directly with the shop window via data returned to the mobile phone/device by the central management module 11 so that it can address it directly.

The time the mobile phone is linked to the shop window to interact with it is limited, so that the shop window can be made available for interactions with other mobile phones. The time may be calculated by the shop window itself or by the central shop window manager. When the time expires, the expiry notice is sent to the user as part of the 15" response for an interaction which has been initiated from the mobile phone 3.

### Method of implementation of the proposed system

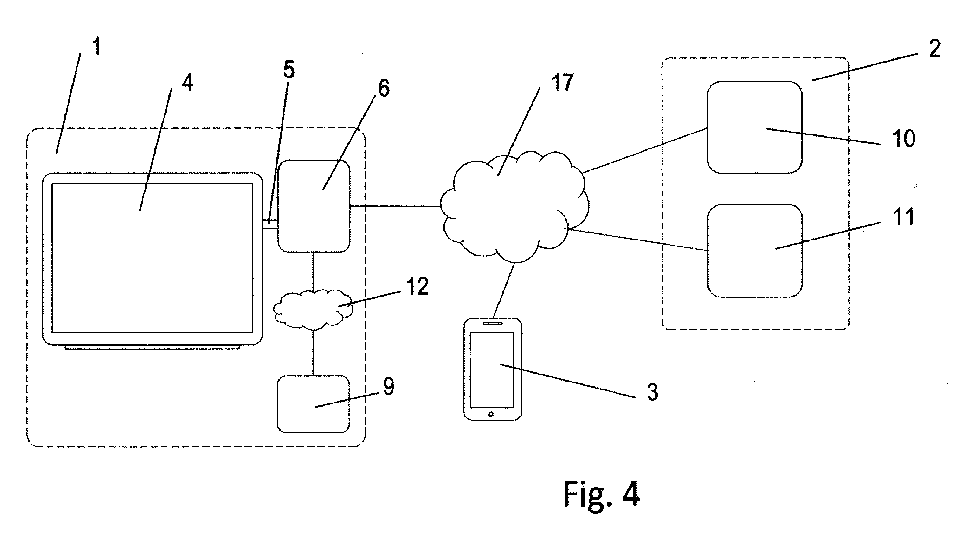

The diagram shown in Figure 4 of the drawings illustrates a proposal for implementation of the solution provided by this invention. The diagram in Figure 4 shows the three principal elements of the solution, in other words, a specific shop window 1, a central shop window manager 2 and a mobile phone device 3 which includes the interaction application. The connectivity between the three elements described above is via IP connections over the Internet 17.

The shop window 1 in Figure 4 is implemented by a viewing screen, such as a monitor or television 4, which is connected by means of an HDMI cable 5 to a central processing unit 6 which acts as a control module for the shop window. This central processing unit 6 is implemented with an Android device (for example a "Dongle Android") with no screen, with IP connectivity and an HDMI connection. It may also be any other programmable device using different technologies, such as a computer, a Linux system (for example, RaspBerry-Pi type) or equivalent.

The content manager 9 in Figure 4 constitutes an external repository which may be in the cloud 17, and which is accessed by the shop window control module 6 via a private IP connection (for example, a personal cloud, a local shop window network, etc.).

The interactive shop window represented in Figure 4 is formed of an Android application which runs in the shop window control module 6. The structure of the application is hybrid, i.e. it is formed of a native code in Java and another Web code (HTML5 + Javascript + CSS) which is launched in a web component within a screen of the native application. The web part of the shop window is an HTML application which has been built inside the shop window control module 6. This application is the result of the combination of content, which comes from the content manager 9 and from the template which are collected from the central template manager 10. This means that the template is an HTML file with sample data, although logically it may have other formats (XML, JSON, etc.).

The shop window 1 in Figure 4 is connected to internet 17, and this is the channel through which it communicates with the central shop window manager 2 and the mobile phone 3. The servers 10, 11 of the central shop window manager 2 are also housed in the cloud 17 and are accessible via IP connections.

To enable the central shop window manager 2 to scale a large number of shop windows in a suitable manner and ensure that the link process is quick, the central link/interaction management module 11 is supported by a high performance technology, such as the NO-SQL Redis engine.

The invention has been described above on the basis of a particular form of embodiment of the invention. Evidently, the invention may be subject to modifications within the scope of application thereof, which experts in the matter may carry out without departing from the scope of the following claims.

## Claims

1. System of interactive shop windows, by means of which it is possible to establish connectivity between the devices installed for the purpose in digital shop windows and other devices carried by a user when the user approaches the shop window, for the purpose of showing the users products located in physical spaces such as shop windows, shop windows and kiosks or news-stands, and also for the purpose of allowing interaction between the mobile phones carried by users and machine and systems in their vicinity such as "Internet of Things" and "Smart Cities", **characterized in that** the system essentially comprises an interactive shop window (1), a common service infrastructure manager (2) for all the shop windows and mobile phones (3) carried by the users, in which:
- the interactive shop window (1) is an element which can be replicated in different retail outlets and comprises a control module (6) with a processing and communication capacity;
- the common infrastructure manager (2) constitutes an element which coordinates the solution and provides support for all the shop windows in the system, and
- the mobile phone (3) consists of a smartphone-type mobile phone or equivalent device with the ability to store an application and provide IP connectivity.

2. System according to claim 1, **characterized in that** the interactive shop window control module (6) includes: a layout construction module (7) which is responsible for carrying out: a construction function for the visual part of the shop window, with the ability to access a central template manager (10) via an interface (13) to recover a template which will be used for the shop window, and with the ability to access a content manager (9) via an interface (12) to recover data relating to products in the shop window, and also with the ability to store other types of information, such as analytical information, obtained from the aforementioned content manager module (9); an interaction control module (8) from outside the shop window (1), designed to carry out a management function for the interactions and the information exchanged from outside the shop window, and also with the ability to communicate via a communications interface (14) with a central link/interaction manager (11) to coordinate the link with the users' mobile phones (3), the interactions from them and the exchange of content; and a standardised interface (5), which carries out the function of presentation of the result, and which has the ability to connect with a results presentation device (4).

3. System according to either of the claims 1 and 2, **characterized in that** the central shop window manager (2), which constitutes the element that coordinates the solution and provides centralised support for all the shop windows included in the system, comprises: a template management module (10), which acts as a repository for "templates" or models of example shop window structures used by the content construction module (7) to add the content of that specific shop window; a link/interaction management module (11) designed to establish a temporary link between a user device (3) and a specific interactive shop window (1), so that the user device (3) can interact with the content displayed on the shop window presentation device (4).

4. System according to any of the claims 1 to 3, **characterized in that** the smartphone-type mobile phone (3) or equivalent device contains an application structured on the basis of means which allow:
- the capture or collection of shop window identification information based on a signal which is emitted (Bluetooth) or collected (NFC, sound, graphic or text signal, etc.), with the option for shop window identification to be carried out indirectly, through positioning mechanisms in the device which is located close to the shop window (GPS coordinates, for example), or with the user carrying out the identification using a list or maps contained in the application;
- communication with the central link/interaction management module (11), by sending the shop window identifier, to link with that shop window and initiate an interaction session, and
- the invocation of operations within the session so that information on what is presented in the shop window can be sent, and response data received from the system.

5. Method for the implementation of the system of one or more of the claims 1 to 4, in particular a method to set up the implementation of an interactive shop window (1), or to update the shop window when there is a change of template or content, in which the method includes:
- recovery using a layout construction module (7) of the content (12') which is stored in the repository of the content management module (9);
- recovery using the layout construction module 7 of the template (13') corresponding to the shop window (1), the template for which is stored in the central template manager module (10) repository;
- combination by means of the layout construction module (7) of the content and the template, and generation of the layout (5') in the presentation module (4), and
- communication (14') between the interaction control module (8) and the link/interaction module (11) to indicate that the former is operational and available.

6. Method for the implementation of the system of one or more of the claims 1 to 4, in particular for execution of the link process between a user mobile phone (3) and an interactive shop window (1), **characterized in that** it comprises:
- obtaining through the user's mobile phone (3) or the application contained therein an identifier (16) for an available shop window and providing this identifier (16) to a central link/interaction management module (11);
- communication from said central link/interaction management module (11) of the shop window identifier (16) to the shop window interaction control module (8) and receipt of a response (14"') indicating agreement;
- confirmation to the user, through this central link/interaction management module (11), of the operation, from which moment on the user's mobile phone (3) can interact with the shop window (1).

7. Method according to claim 6, **characterized in that** the link time between the mobile phone (3) and the shop window (1) is a limited period of time, so that the shop window can become free for other interactions with other mobile phones; this period of time may be calculated by the shop window itself or by the central shop window manager (2), and the expiry of said period of time is notified to the user as part of the response (15"') in an interaction which has been initiated from the mobile phone (3).

8. Architecture for the implementation of an interactive shop window in accordance with one or more of the claims 1 to 7, in which said interactive shop window includes a shop window (1), a central shop window manager (2) and a mobile phone (3) carried by a user, in which these components are interconnected via IP connectivity via the Internet (17), in which:
- the shop window (1) includes a viewing screen (4) connected by means of an HDMI-type cable (5) to a central processing unit (6) which acts as the shop window control module, and
- the content manager (9) is an external repository which may be in the cloud (17), and which is accessed by the shop window control module (6) via a private IP connection (a personal cloud, a local shop window network or equivalent connection).

9. Architecture according to claim 8, **characterized in that** the central processing unit (6) is implemented in Android device mode, such as a "Dongle Android" device, with IP connectivity and with an HDMI connection, and which may optionally consist of another programmable device using different technologies, including a computer, a Linux system or other equivalent system.

10. Architecture according to claims 8 or 9, **characterized in that** the interactive shop window (1) consists of an Android application which may be run in the shop window control module (6), in which the structure of the application is hybrid and is formed of a native code in Java and another web code (HTML5 + Javascript + CSS), where the web part of the shop window is an HTML application which is constructed in the shop window control module (6), constituting the combination of content from the shop window control module (9) and the template collected from the central template manager (10), in which the template is preferably an HTML file with data.

11. Architecture according to one or more of the claims 8 to 10, **characterized in that** the shop window (1) is connected to the Internet (17), which is the channel used to communicate with the central shop window manager (2) and with the mobile phone (3), in which the servers (10, 11) of the central shop window manager (2) are also housed in the cloud (17) and are accessible via IP connectivity.

12. Architecture according to one or more of the claims 8 to 11, **characterized in that** the central link/interaction management module (11) is supported by high performance technology, such as the NO-SQL Redis engine, to allow the central shop window manager (2) to scale appropriately a large number of shop windows and ensure that the link process is quick.
